# FASCICULE DE BREVET EUROPEEN

(11) **EP 2 486 412 B1**
(45) Date de publication et mention de la délivrance du brevet: **25.11.2015**
(21) Numéro de dépôt: 10781973.2
(22) Date de dépôt: 11.10.2010
(51) Int. Cl.: G01P 5/26, G01S 17/58

(54) **DISPOSITIF DE MESURE DE LA VITESSE DU VENT**
VORRICHTUNG ZUM MESSEN DER WINDGESCHWINDIGKEIT
DEVICE FOR MEASURING WIND SPEED

(30) Priorité: 09.10.2009 FR 0957080
(43) Date de publication de la demande: 15.08.2012
(73) Titulaire: Epsiline, 31100 Toulouse (FR)
(72) Inventeur: LEPAYSAN, Christophe, F-31400 Toulouse (FR); TEYSSEYRE, Raphaël, 31270 Cugnaux (FR)
(74) Mandataire: Cabinet Plasseraud
(86) Numéro de dépôt international: PCT/FR2010/052149
(87) Numéro de publication internationale: WO 2011/042678

(56) Documents cités:
- WO-A1-00/29854
- DE-A1-102007 052 795
- FR-A1- 2 720 839
- US-A- 4 664 513
- US-A- 5 005 144
- US-B1- 6 320 272
- GUIDO GIULIANI ET AL: "REVIEW ARTICLE; Laser diode self-mixing technique for sensing applications; Laser diode self-mixing technique for sensing applications", JOURNAL OF OPTICS. A, PURE AND APPLIED OPTICS, INSTITUTE OF PHYSICS PUBLISHING, BRISTOL, GB LNKD- DOI:10.1088/1464-4258/4/6/371, vol. 4, no. 6, 1 novembre 2002 (2002-11-01), pages S283-S294, XP020080988, ISSN: 1464-4258
- WANG W M ET AL: "SELF-MIXING INTERFERENCE INSIDE A SINGLE-MODE DIODE LASER FOR OPTICAL SENSING APPLICATIONS", JOURNAL OF LIGHTWAVE TECHNOLOGY, IEEE SERVICE CENTER, NEW YORK, NY, US LNKD- DOI:10.1109/50.320940, vol. 12, no. 9, 1 septembre 1994 (1994-09-01), pages 1577-1587, XP000484336, ISSN: 0733-8724

## Description

La présente invention concerne le domaine de la mesure du vent, plus particulièrement à l'aide de lumière laser.

On connaît déjà dans l'état de la technique, notamment dans le document WO 2009/046717, un anémomètre utilisant un système Lidar (Light Détection And Ranging). Ce dispositif est capable d'émettre un faisceau laser, focalisé par un système optique à une distance de focalisation de plusieurs dizaines de mètres, vers un volume de mesure dans lequel des particules présentes dans l'air se déplacent, sous l'effet du vent. Ces particules réfléchissent la lumière reçue, en émettant un faisceau en direction du système optique, appelé faisceau réfléchi. Le Lidar reçoit le faisceau réfléchi par les particules, et traite ensuite les interférences intervenant entre le faisceau émis et le faisceau réfléchi, de façon à en déduire la vitesse des particules, le décalage des fréquences entre le faisceau émis et le faisceau réfléchi dépendant de cette vitesse, par effet Doppler.

Il se trouve qu'un tel dispositif d'émission de faisceau laser est particulièrement coûteux à réaliser.

Un dispositif similaire est décrit dans le document US 6 320 272 B1. Le document "Laser diode self-mixing technique for sensing applications" (Guido Giuliani et al., Journal of Optics, A, Bristol, GB, vol. 4, no. 6, 01.11.2002, pages S283-S294) révèle des dispositifs de détermination de vitesse comprenant une diode laser et utilisant la technique de self-mixing.

La présente invention a notamment pour but de proposer un dispositif de mesure de la vitesse du vent moins coûteux.

A cet effet, l'invention a notamment pour objet un dispositif et un procédé de mesure de la vitesse du vent selon les revendications 1 et 12.

En utilisant une diode laser, on fournit un dispositif beaucoup plus économique pour mesurer la vitesse du vent. En outre, la réception du faisceau réfléchi est réalisée par self-mixing, ce qui est particulièrement intéressant. On notera que le self-mixing est aussi connu sous le nom de "rétro-injection intra-cavité" et correspond à un dispositif dans lequel le faisceau réfléchi est réinjecté dans la même cavité que le faisceau émis par la diode laser. Généralement, les moyens de réception du faisceau réfléchi comprennent une photodiode, disposée juste derrière la diode laser, et les interférences sont directement créées à l'intérieur de la cavité laser puis reçues par la photodiode. On notera que les moyens de réception associés à la diode laser par self-mixing permettent de réaliser en particulier une amplification optique du signal d'interférences. L'utilisation du self-mixing est avantageuse, d'une part parce qu'une diode laser et une photodiode sont peu coûteuses, d'autre part parce qu'elles ne nécessitent pas de prévoir un détecteur à part, disposé à un autre emplacement que le laser et recevant uniquement le faisceau réfléchi après déviation de ce faisceau réfléchi par un interféromètre. Ainsi, on utilise une photodiode qui est placée juste derrière la diode, et il n'est pas nécessaire de gérer les problèmes d'alignement d'un interféromètre. Par ailleurs, le dispositif est particulièrement compact, puisque le faisceau réfléchi revient dans la cavité de la diode laser, ce qui est très différent dans le cas où l'on utilise un interféromètre, réfléchissant le faisceau reçu, par exemple selon un angle de 90° par rapport au faisceau émis, ce qui requiert de placer le détecteur à une certaine distance du laser, et prend donc de la place. Ainsi, le dispositif proposé peut avoir un volume voisin de celui d'un cube de 1 cm (centimètres) d'arête, et de 10 à 20 cm d'arête si l'on inclut les moyens de traitement du signal dans le dispositif, alors qu'un dispositif muni d'un Lidar a généralement un volume voisin de celui d'un cube de 50 cm d'arête, et pèse autour de 50 kg (kilogrammes).

On notera que les particules qui réfléchissent la lumière du dispositif sont des particules se trouvant dans l'air, souvent appelées aérosols. Ces particules ont généralement un diamètre compris entre 0,1 µm (micromètre) et 10 µm. Aussi, la diffusion réalisée lors de la réflexion du faisceau émis est une diffusion de Mie, mise en oeuvre à l'échelle de la particule, et se distingue d'une diffusion de Rayleigh, mise en oeuvre à l'échelle d'une molécule. Les particules peuvent être par exemple des particules comprenant du carbone ou des ions.

La densité de ces particules dans l'air est une densité très particulière, du fait qu'elle est très faible et qu'il est donc difficile d'obtenir un signal continu pour analyser les interférences. Par ailleurs, généralement, plus la distance focale est grande, meilleure est la mesure car le mouvement de l'air est peu contrarié par la présence du dispositif.

Aussi, alors que les anémomètres comprenant un laser focalisent généralement à une distance de plusieurs dizaines de mètres, l'inventeur a eu l'idée de focaliser sur une distance plus petite et a constaté que, pour une distance focale comprise entre 5 cm et 2 m, on obtient un signal suffisamment périodique et d'intensité suffisante pour être traité par la suite afin de fournir la vitesse du vent. On notera toutefois que ce signal est épisodique.

Ainsi, en prévoyant une distance de focalisation comprise entre 5 cm et 2 m, on fait une utilisation pertinente du phénomène de self-mixing pour la mesure de la vitesse du vent. En effet, en focalisant sur une distance plus petite, on recueille davantage de lumière après réflexion sur la particule. Ainsi, la puissance du signal reçu peut être supérieure à celle générée par le bruit de la diode laser et le dispositif fournit des résultats satisfaisants. Par ailleurs, on prévoit une distance de focalisation supérieure à 5 cm, si bien que les mouvements de l'air dans la zone de focalisation ne sont pas contrariés par le volume du dispositif.

On notera que les moyens de focalisation du faisceau émis focalisent la lumière vers un volume de focalisation prédéterminé. Ce volume est suffisamment grand pour que l'on puisse avoir un signal réfléchi par une ou plusieurs particules au moins toutes les secondes, et suffisamment petit pour que l'éclairement du faisceau laser soir suffisamment concentré. Le dispositif est adapté pour traiter un faisceau réfléchi par des particules ayant un diamètre compris entre 0,1 et 10 µm, par exemple une particule comprenant du carbone ou un ion.

Le dispositif peut en outre comporter l'une ou plusieurs des caractéristiques suivantes.
- Les moyens de transmission du signal sont électroniques. Ils comprennent une carte de transmission comportant un circuit imprimé sur lequel sont soudés des composants électroniques, de manière à servir d'interface entre les moyens de réception du dispositif et les moyens de traitement du signal. On notera que cette carte de transmission est configurée de façon spécifique, de façon à pouvoir transmettre de façon exploitable le signal d'interférences intervenant entre le faisceau émis et le faisceau réfléchi. En particulier, la carte est configurée pour fournir un bruit particulièrement faible, étant donné que le signal réfléchi par les particules est intermittent et relativement faible.
- Les moyens de transmission du signal comprennent des moyens d'amplification électronique, de manière à réaliser une amplification électronique du signal d'interférences. Cette amplification est particulièrement intéressante car le signal est intermittent et relativement faible.
- La diode laser est une diode émettant en mono-mode longitudinal. Ainsi, le signal est plus facile à traiter que dans le cas où la diode a une puissance supérieure et émet en mutlimodes. La diode laser est par exemple de type Fabry-Perot.
- Les moyens de traitement du signal sont configurés pour sélectionner une partie du signal reçu, à savoir la partie dont l'amplitude ou la puissance est supérieure à un seuil, ce seuil correspondant à l'amplitude ou à la puissance d'un signal obtenu par une mesure dans un endroit sans vent. Il est particulièrement intéressant de sélectionner une partie seulement du signal reçu. En effet, le signal d'interférences généré par une particule est épisodique, il est donc avantageux de ne sélectionner que la partie du signal ayant une certaine amplitude ou puissance, correspondant à des interférences effectives. Ainsi, plutôt que d'utiliser tout le signal reçu, sans effectuer de tri, on propose de ne traiter que la partie du signal correspondant à un pic, et de ne déduire la vitesse du vent qu'à partir de cette partie. On notera que la sélection effectuée par les moyens de traitement du signal peut éventuellement être effectuée après un traitement préalable du signal reçu. Par exemple, on peut appliquer tout d'abord une transformée de Fourier sur le signal reçu, puis effectuer une sélection sur le signal résultant de cette transformée, au cours de laquelle on sélectionne la partie de la transformée dont l'amplitude ou la puissance est supérieure à un seuil, ce seuil correspondant à l'amplitude ou à la puissance de la transformée de Fourier d'un signal obtenu par une mesure dans un endroit sans vent.
- Les moyens de traitement du signal comprennent des moyens de détection d'un pic, des moyens d'enregistrement du signal dans un intervalle de temps autour de ce pic et des moyens d'application d'une transformée de Fourier sur ce signal. En effet, le signal étant épisodique, l'application d'une transformée de Fourier sur tout le signal est plus difficilement exploitable. En n'appliquant la transformée que sur une partie donnée du signal, les résultats sont particulièrement satisfaisants pour déterminer la vitesse du vent.
- L'intervalle de temps sur lequel on enregistre le signal est compris entre 50 et 300 µs (microsecondes) autour du pic.
- La transformée de Fourier est effectuée sur une gamme de fréquences comprise entre 0 et 1 GHz.
- La longueur d'onde de la lumière émise par diode laser est voisine de 780 nm (nanomètres). Néanmoins, d'autres longueurs d'onde peuvent être envisagées.
- La puissance de la diode laser est comprise entre 0 et 50 mW (milliwatts), de préférence entre 0 et 30 mW.
- La transformée de Fourier est effectuée sur un intervalle de temps inférieur à 200 µs (microsecondes).
- Le dispositif est alimenté par énergie photovoltaïque. En effet, le dispositif présenté ci-dessus requérant peu d'énergie, de l'ordre de quelques W (Watts) seulement, on peut utiliser une cellule photovoltaïque, ayant par exemple une puissance de 10 W, pour faire fonctionner le dispositif. Ce type d'alimentation est particulièrement intéressant, du fait que l'anémomètre est disposé à l'extérieur, donc exposé à l'énergie solaire, et du fait que cela évite d'avoir à prévoir d'acheminer de l'énergie jusqu'au dispositif. On notera que les moyens d'alimentation ne font pas forcément partie du dispositif. Par ailleurs, le dispositif peut bien sûr être alimenté par d'autres moyens d'alimentation, par exemple par batterie.
- Les moyens de traitement du signal sont capables de fournir, outre la vitesse de la particule, la quantité de particules dans l'air. On peut en particulier quantifier ainsi la pollution de l'air.
- Le dispositif comprend trois diodes laser, disposées de façon à émettre trois faisceaux laser non coplanaires. Ainsi, on obtient une mesure très précise de la vitesse du vent dans l'espace, du fait que chaque diode laser permet d'obtenir la composante du vent dans une direction, et que les trois directions ne sont pas coplanaires. En d'autres termes, comme une diode laser permet de mesurer la vitesse dans une direction, on peut au choix mesurer la vitesse du vent selon une direction (une seule diode), dans un plan (deux diodes), ou dans l'espace (trois diodes).
- Le dispositif comprend les moyens de traitement du signal d'interférences intervenant entre le faisceau émis et le faisceau réfléchi. Dans ce cas, les moyens de traitement font partie du dispositif.

L'invention a également pour objet un système de mesure de la vitesse du vent, comportant le dispositif décrit ci-dessus et les moyens de traitement du signal d'interférences intervenant entre le faisceau émis et le faisceau réfléchi. Dans ce cas, les moyens de traitement sont à distance du dispositif.

L'invention sera mieux comprise à la lecture de la description qui va suivre, donnée uniquement à titre d'exemple, faite en référence aux dessins dans lesquels :
- la figure 1 est une représentation schématique d'un exemple de dispositif de mesure de la vitesse du vent ; et
- la figure 2 est un diagramme illustrant un exemple de granulométrie des particules de l'air réfléchissant la lumière laser.

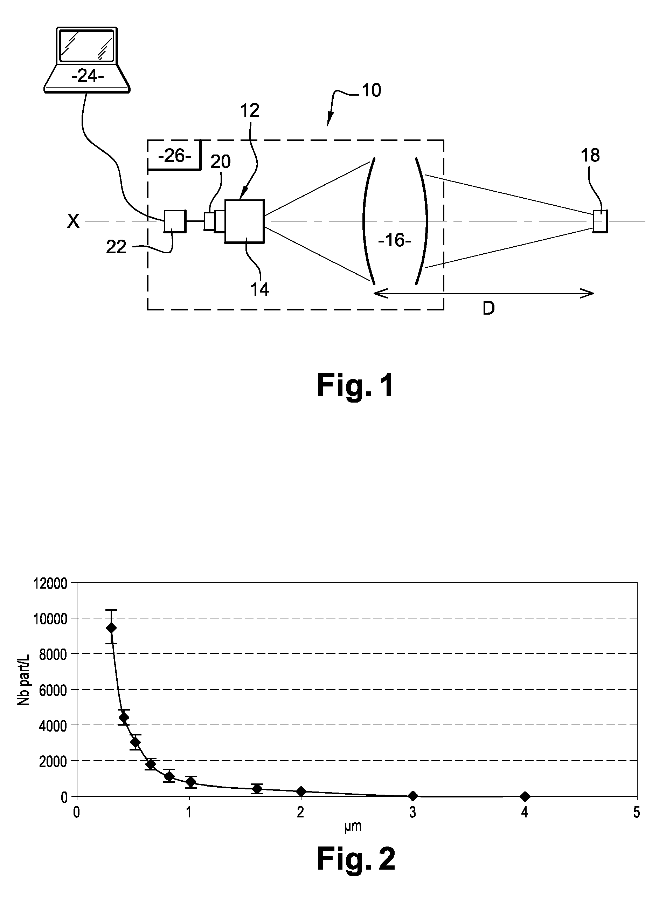

On a représenté sur la figure 1 un dispositif 10 de mesure de la vitesse du vent.

Ce dispositif 10 comporte des moyens 12 d'émission d'un faisceau laser. Les moyens 12 comprennent une diode laser, par exemple une diode de type Fabry-Perot, émettant en mono-mode longitudinal, à une longueur d'onde de 785 nm dans cet exemple. D'autres longueurs d'ondes pourraient être utilisées. Toujours dans cet exemple, la puissance de la diode laser 12 est comprise entre 0 et 30 mW. Cette diode laser 12 comporte une cavité optique 14 pour amplifier la lumière laser émise. Le dispositif 10 comporte par ailleurs des moyens de focalisation 16, capables de focaliser le faisceau émis par la photodiode 12 vers un espace de focalisation 18. Le volume de focalisation 18, ou volume efficace, est disposé à une distance D des moyens de focalisation 16, cette distance D correspondant à la distance de focalisation du dispositif. La distance de focalisation D est comprise entre 5 cm et 2 m.

Le dispositif 10 comporte par ailleurs des moyens 20 de réception d'un faisceau réfléchi. Plus précisément, les moyens 20 sont configurés pour recevoir un faisceau émis par la diode 12, après réflexion de ce faisceau par une particule présente dans l'air et se trouvant dans le volume de focalisation 18, par exemple une particule composée de carbone ou un ion. Comme on peut le voir sur la figure 2, la taille des particules est, dans cet exemple, de l'ordre de quelques dixièmes de µm, comprise entre 0,1 et 5 µm.

Les moyens de réception 20 comprennent une photodiode, disposée juste derrière la diode laser 12, et sont associés à la diode laser 12 par self-mixing, c'est-à-dire que le faisceau réfléchi passe dans la cavité optique 14 de façon que des interférences se produisent entre le faisceau émis et le faisceau réfléchi.

Le dispositif 10 comporte par ailleurs des moyens 22 de transmission du signal d'interférences à des moyens 24 de traitement de ce signal, permettant de déduire la vitesse de la ou des particules ayant réfléchi le faisceau émis. Les moyens de transmission 22 sont électroniques. Ils comprennent en particulier des moyens d'amplification électronique, de manière à réaliser une amplification électronique du signal d'interférences. Les moyens de transmission sont composés par exemple d'une carte de transmission, comprenant un circuit imprimé sur lequel sont soudés des composants électroniques, parmi lesquels des amplificateurs opérationnels. Les moyens 24 de traitement du signal sont configurés pour pouvoir appliquer une ou plusieurs transformées de Fourier au signal reçu afin de fournir des informations relatives à la vitesse du vent. Dans cet exemple, les moyens 24 sont à distance du dispositif 10, néanmoins ils pourraient également être intégrés au dispositif 10.

Plus précisément, les moyens 24 de traitement du signal sont configurés pour sélectionner une partie du signal reçu par les moyens de transmission 22, cette partie correspondant à la partie du signal dont l'amplitude ou la puissance est supérieure à un seuil prédéterminé. Ce seuil prédéterminé correspond à l'amplitude ou la puissance du signal reçu par les moyens de transmission 22 suite à une mesure effectuée dans un endroit sans vent. En d'autres termes, ce seuil prédéterminé est caractéristique du bruit moyen du dispositif 10, que l'on supprime du signal reçu lorsque l'on souhaite mesurer le vent. Les moyens 24 de traitement du signal comportent par ailleurs des moyens de détection d'un pic et des moyens d'enregistrement du signal reçu. Ces moyens d'enregistrement sont configurés pour enregistrer le signal dans un intervalle de temps autour du pic détecté. Cet intervalle de temps est compris entre 50 et 300 µs autour du pic, par exemple 90 µs, c'est-à-dire qu'il commence 45 µs avant le pic détecté et s'arrête 45 µs après le pic détecté. En effet, le passage d'une particule dans le faisceau produit un signal sinusoïdal temporaire dont la durée est déterminée par le temps d'interaction entre la particule et le faisceau. Cette durée est généralement comprise entre 50 µs et 300 µs.

Par ailleurs, les moyens de traitement du signal 24 comprennent des moyens d'application d'une ou plusieurs transformées de Fourier sur le signal enregistré. La transformée de Fourier est effectuée sur une gamme de fréquences comprise entre 0 et 1 GHz, pendant un intervalle de temps inférieur à 200 µs.

Les moyens 24 de traitement du signal sont par ailleurs capables, dans cet exemple, de fournir la quantité de particules dans l'air, permettant d'en déduire la pollution de l'air au voisinage du volume de focalisation 18.

Le dispositif 10 comporte par ailleurs une source d'alimentation 26, qui peut prendre la forme d'une cellule photovoltaïque ou de tout autre type d'alimentation permettant de faire fonctionner la diode laser 12.

Le fonctionnement du dispositif 10 va à présent être décrit.

Afin de mesurer la vitesse du vent, la diode laser 12 émet un faisceau, appelé faisceau émis, qui sort de la cavité 14, passe dans le système optique 16 et est ensuite focalisé vers le volume de focalisation 18. Dans ce volume de focalisation 18, de l'air circule, donc en particulier des particules. En effet, le volume de focalisation 18 a des dimensions suffisantes pour garantir qu'au moins une particule se trouve à l'intérieur de ce volume de façon intermittente, par exemple au moins toutes les secondes et est capable de réfléchir le faisceau laser émis. Après réflexion par au moins l'une des particules, le faisceau réfléchi passe à nouveau à travers le système optique 16, traverse ensuite la cavité 14, jusqu'à être reçu par la photodiode 20. Ainsi, la cavité optique 14 est un lieu dans lequel les interférences peuvent intervenir entre le faisceau émis par la diode 12 et le faisceau réfléchi par la particule. Aussi, la photodiode 20 reçoit un signal d'interférence qui est ensuite transmis aux moyens de traitement 24 grâce aux moyens 22. On notera que le signal est amplifié électroniquement avant d'être transmis aux moyens de traitement 24. A partir de ce signal reçu, les moyens 24 effectuent un traitement de façon à en déduire la vitesse de la ou des particules ayant réfléchi le faisceau. En effet, sous l'effet du vent, une particule qui se trouve dans le volume 18 se trouve en déplacement par rapport au récepteur 20, si bien que la fréquence du faisceau réfléchi est décalée par rapport à la fréquence du faisceau émis, par effet Doppler. Aussi, à partir du signal d'interférences, on peut déduire le décalage de fréquences et donc la composante de la vitesse de la particule par rapport au récepteur 20 dans la direction X.

Plus précisément, à partir du signal d'interférences, on effectue tout d'abord une sélection, en supprimant du signal reçu toute la partie dont l'amplitude ou la puissance est inférieure au seuil correspondant au bruit du dispositif 10, déterminé par mesure dans un endroit sans vent. Puis, à partir du signal sélectionné, on détecte un pic et on enregistre le signal dans un intervalle de temps compris par exemple entre 45µs avant le pic et 45 µs après le pic. On applique ensuite une ou plusieurs transformées de Fourier sur ce signal, sur un intervalle de temps inférieur à 200 µs. A partir de cette transformée de Fourier, on peut déduire le décalage de fréquences entre le faisceau émis et le faisceau réfléchi, donc la composante de la vitesse dans la direction X.

Ainsi, on dispose d'un dispositif 10 peu coûteux et prenant très peu de place pour mesurer la vitesse du vent. En outre, ce dispositif 10 est d'utilisation aisée car il n'est pas nécessaire de prévoir d'alignement avec un interféromètre.

On notera que l'invention n'est pas limitée aux modes de réalisation précédemment décrits.

En particulier, afin d'avoir une meilleure précision dans la vitesse du vent, on peut prévoir que le dispositif 10 comprenne trois diodes laser 12, émettant chacune dans une direction non coplanaire.

Par ailleurs, dans l'exemple décrit, les moyens de traitement 24 sont disposés à distance du dispositif 10. Néanmoins, on peut tout à fait envisager que les moyens de traitement 24 fassent partie du dispositif 10, par exemple sous la forme d'une puce électronique intégrée dans le dispositif 10, configurée pour transmettre les informations à un enregistreur disposé à distance du dispositif 10.

## Revendications

1. Dispositif (10) de mesure de la vitesse du vent, comportant :
- des moyens (12) d'émission d'un faisceau laser, appelé faisceau émis,
- des moyens (16) de focalisation du faisceau émis, à une distance de focalisation (D) prédéterminée,
- des moyens (20) de réception du faisceau émis après réflexion par une particule présente dans l'air (18), appelé faisceau réfléchi,
- des moyens (32) de transmission du signal d'interférences intervenant entre le faisceau émis et le faisceau réfléchi à des moyens (24) de traitement du signal pour en déduire la vitesse de la particule,
**caractérisé en ce que**
les moyens (24) de traitement du signal sont configurés pour sélectionner une partie du signal reçu, à savoir la partie dont l'amplitude ou la puissance est supérieure à un seuil, ce seuil correspondant à l'amplitude ou la puissance du signal obtenu par une mesure dans un endroit sans vent,
les moyens d'émission comprennent une diode laser (12) et les moyens de réception (20) sont associés à la diode laser par self-mixing, la distance de focalisation (D) étant comprise entre 5 cm et 2 m.

2. Dispositif selon la revendication précédente dans lequel la diode laser (12) est une diode émettant en mono-mode longitudinal.

3. Dispositif selon l'une quelconque des revendications précédentes, dans lequel la sélection effectuée par les moyens (24) de traitement du signal est effectuée après un traitement préalable du signal reçu, par exemple après l'application d'une transformée de Fourier sur le signal reçu.

4. Dispositif selon l'une quelconque des revendications précédentes, dans lequel les moyens (24) de transmission du signal sont électroniques et comprennent une carte de transmission.

5. Dispositif selon la revendication précédente dans lequel les moyens (24) de transmission du signal comprennent des moyens d'amplification électronique, de manière à réaliser une amplification électronique du signal d'interférences.

6. Dispositif selon l'une quelconque des revendications précédentes, dans lequel les moyens (24) de traitement du signal comprennent des moyens (24) de détection d'un pic, des moyens (24) d'enregistrement du signal dans un intervalle de temps autour de ce pic et des moyens (24) d'application d'une transformée de Fourier sur ce signal.

7. Dispositif selon la revendication précédente, dans lequel l'intervalle de temps sur lequel on enregistre le signal est compris entre 50 et 300 µs autour du pic.

8. Dispositif selon l'une quelconque des revendications précédentes, dans lequel la puissance de la diode laser 12 est comprise entre 0 et 50 mW, de préférence entre 0 et 30 mW.

9. Dispositif selon l'une quelconque des revendications précédentes, alimenté par énergie photovoltaïque (26).

10. Dispositif selon l'une quelconque des revendications précédentes, dans lequel les moyens (24) de traitement du signal sont capables de fournir, outre la vitesse de la particule, la quantité de particules dans l'air (18).

11. Dispositif selon l'une quelconque des revendications précédentes, comprenant trois diodes laser (12), qui sont disposées de façon à émettre trois faisceaux laser non coplanaires.

12. Procédé de mesure de la vitesse du vent, comportant les étapes suivantes :
- émission d'un faisceau laser, appelé faisceau émis,
- focalisation du faisceau émis, à une distance de focalisation (D) prédéterminée,
- réception du faisceau émis après réflexion par une particule présente dans l'air (18), appelé faisceau réfléchi,
- transmission du signal d'interférences intervenant entre le faisceau émis et le faisceau réfléchi
- traitement du signal d'interférences pour en déduire la vitesse de la particule,
**caractérisé en ce que**
le traitement du signal sélectionne une partie du signal reçu, à savoir la partie dont l'amplitude ou la puissance est supérieure à un seuil, ce seuil correspondant à l'amplitude ou la puissance du signal obtenu par une mesure dans un endroit sans vent,
**en ce que** l'émission du faisceau laser est réalisée par une diode laser (12) et
**en ce que** les moyens de réception (20) sont associés à la diode laser par self-mixing, la distance de focalisation (D) étant comprise entre 5 cm et 2 m.

13. Procédé selon la revendication 12, **caractérisé en ce que** l'émission du faisceau émis est réalisée en mono-mode longitudinal.

14. Procédé selon l'une des revendications 12 ou 13, caractérisé en ce l'étape de sélection d'une partie du signal reçu est précédée d'une étape de traitement préalable du signal reçu, par exemple une étape d'application d'une transformée de Fourier.

15. Procédé selon l'une des revendications 12 à 14, **caractérisé en ce qu'**il comporte une étape d'amplification électronique du signal d'interférences.

## Patentansprüche

1. Vorrichtung (10) zum Messen der Windgeschwindigkeit, umfassend:
- Mittel (12) zum Aussenden eines Laserbündels, genannt ausgesendetes Bündel,
- Mittel (16) zum Fokussieren des ausgesendeten Bündels in einem vorbestimmten Fokussierabstand (D),
- Mittel (20) zum Empfangen des ausgesendeten Bündels nach der Reflexion durch ein in der Luft (18) vorhandenes Partikel, genannt reflektiertes Bündel,
- Mittel (32) zum Übertragen des Signals der zwischen dem ausgesendeten Bündel und dem reflektierten Bündel auftretenden Interferenzen an Signalverarbeitungsmittel (24), um davon die Geschwindigkeit des Partikels abzuleiten,
**dadurch gekennzeichnet, dass**
die Signalverarbeitungsmittel (24) dafür ausgelegt sind, einen Teil des empfangenen Signals auszuwählen, nämlich jenen Teil, dessen Amplitude oder Stärke über einem Schwellenwert liegt, wobei dieser Schwellenwert der Amplitude oder Stärke des Signals entspricht, das durch eine Messung an einer Stelle ohne Wind gewonnen wurde,
wobei die Sendemittel eine Laserdiode (12) umfassen und die Empfangsmittel (20) durch Self-Mixing mit der Laserdiode verbunden sind, wobei der Fokussierabstand (D) zwischen 5 cm und 2 m beträgt.

2. Vorrichtung nach dem vorhergehenden Anspruch, wobei die Laserdiode (12) eine Diode ist, die im longitudinalen Singlemodebetrieb sendet.

3. Vorrichtung nach einem der vorhergehenden Ansprüche, wobei die Auswahl durch die Signalverarbeitungsmittel (24) nach einer vorherigen Verarbeitung des empfangenen Signals erfolgt, zum Beispiel nach der Anwendung einer Fourier-Transformation an dem empfangenen Signal.

4. Vorrichtung nach einem der vorhergehenden Ansprüche, wobei die Signalübertragungsmittel (24) elektronisch sind und eine Übertragungskarte umfassen.

5. Vorrichtung nach dem vorhergehenden Anspruch, wobei die Signalübertragungsmittel (24) Mittel zur elektronischen Verstärkung umfassen, um eine elektronische Verstärkung des Interferenzsignals durchzuführen.

6. Vorrichtung nach einem der vorhergehenden Ansprüche, wobei die Signalverarbeitungsmittel (24) Mittel (24) zur Erfassung einer Spitze, Mittel (24) zum Aufzeichnen des Signals in einer Zeitspanne um diese Spitze und Mittel (24) zur Anwendung einer Fourier-Transformation an diesem Signal umfassen.

7. Vorrichtung nach dem vorhergehenden Anspruch, wobei die Zeitspanne, über die das Signal aufgezeichnet wird, zwischen 50 und 300 µs um diese Spitze beträgt.

8. Vorrichtung nach einem der vorhergehenden Ansprüche, wobei die Leistung der Laserdiode 12 zwischen 0 und 50 mW, vorzugsweise zwischen 0 und 30 mW beträgt.

9. Vorrichtung nach einem der vorhergehenden Ansprüche, die durch Photovoltaik-Energie (26) gespeist wird.

10. Vorrichtung nach einem der vorhergehenden Ansprüche, wobei die Signalverarbeitungsmittel (24) neben der Partikelgeschwindigkeit die Menge der Partikel in der Luft (18) liefern können.

11. Vorrichtung nach einem der vorhergehenden Ansprüche, umfassend drei Laserdioden (12), die derart angeordnet sind, dass sie drei nicht koplanare Laserbündel aussenden.

12. Verfahren zum Messen der Windgeschwindigkeit, umfassend die folgenden Schritte:
- Aussenden eines Laserbündels, genannt ausgesendetes Bündel,
- Fokussieren des ausgesendeten Bündels in einem vorbestimmten Fokussierabstand (D),
- Empfangen des ausgesendeten Bündels nach der Reflexion durch ein in der Luft (18) vorhandenes Partikel, genannt reflektiertes Bündel,
- Übertragen des Signals der zwischen dem ausgesendeten Bündel und dem reflektierten Bündel auftretenden Interferenzen,
- Verarbeiten des Interferenzsignals, um davon die Geschwindigkeit des Partikels abzuleiten,
**dadurch gekennzeichnet, dass**
die Signalverarbeitung einen Teil des empfangenen Signals auswählt, nämlich jenen Teil, dessen Amplitude oder Stärke über einem Schwellenwert liegt, wobei dieser Schwellenwert der Amplitude oder Stärke des Signals entspricht, das durch eine Messung an einer Stelle ohne Wind gewonnen wurde,
dass das Aussenden des Laserbündels durch eine Laserdiode (12) erfolgt und
dass die Empfangsmittel (20) durch Self-Mixing mit der Laserdiode verbunden sind, wobei der Fokussierabstand (D) zwischen 5 cm und 2 m beträgt.

13. Verfahren nach Anspruch 12, **dadurch gekennzeichnet, dass** das Aussenden des gesendeten Bündels im longitudinalen Singlemodebetrieb erfolgt.

14. Verfahren nach einem der Ansprüche 12 oder 13, **dadurch gekennzeichnet, dass** dem Schritt des Auswählens eines Teils des empfangenen Signals ein Schritt der vorherigen Verarbeitung des empfangenen Signals vorangeht, zum Beispiel ein Schritt der Anwendung einer Fourier-Transformation.

15. Verfahren nach einem der Ansprüche 12 bis 14, **dadurch gekennzeichnet, dass** es einen Schritt der elektronischen Verstärkung des Interferenzsignals umfasst.

## Claims

1. Wind speed measurement device (10), comprising:
- a means (12) for emitting a laser beam, referred to as the emitted beam,
- a means (16) for focusing the emitted beam at a predetermined focal distance (D),
- a means (20) for receiving the emitted beam after it is reflected by a particle in the air (18), referred to as the reflected beam,
- a means (22) for transmitting the signal for the interference occurring between the emitted beam and the reflected beam to a signal processing means (24), in order to deduce the speed of the particle,
**characterized in that**
the signal processing means (24) are configured to select a portion of the received signal, namely the portion having an amplitude or power exceeding a threshold corresponding to the amplitude or power of a signal obtained by a measurement in a windless location,
the emitting means comprises a laser diode (12) and the receiving means (20) is associated with the laser diode by self-mixing, the focal distance (D) being between 5 cm and 2 m.

2. Device according to the above claim, wherein the laser diode (12) is a diode emitting in single longitudinal mode.

3. Device according to any one of the above claims, wherein the selection made by the signal processing means (24) is done after prior processing of the received signal, for example after applying a Fourier transform to the received signal.

4. Device according to any one of the above claims, wherein the signal transmission means (22) is electronic and comprises a transmission board.

5. Device according to the above claim, wherein the signal transmission means (22) comprises an electronic amplification means to amplify the interference signal electronically.

6. Device according to any one of the above claims, wherein the signal processing means (24) comprises a means (24) for detecting a peak, a means (24) for recording the signal within an interval of time around this peak, and a means (24) for applying a Fourier transform to this signal.

7. Device according to the above claim, wherein the time interval during which the signal is recorded is between 50 and 300 µs around the peak.

8. Device according to any one of the above claims, wherein the power of the laser diode 12 is between 0 and 50 mW, preferably between 0 and 30 mW.

9. Device according to any one of the above claims, powered by photovoltaic energy (26).

10. Device according to any one of the above claims, wherein the signal processing means (24) is able to provide the number of particles in the air (18), in addition to the particle speed.

11. Device according to any one of the above claims, comprising three laser diodes (12) which are arranged in a manner that emits three non-coplanar laser beams.

12. Method for measuring the wind speed comprising following steps:
- emitting a laser beam, referred to as the emitted beam,
- focusing the emitted beam at a predetermined focal distance (D),
- receiving the emitted beam after it is reflected by a particle in the air (18), referred to as the reflected beam,
- transmitting the signal for the interference occurring between the emitted beam and the reflected beam
- signal processing in order to deduce the speed of the particle,
**characterized in that**
the signal processing selects a portion of the received signal, namely the portion having an amplitude or power exceeding a threshold corresponding to the amplitude or power of a signal obtained by a measurement in a windless location,
the emitting of the laser beam is realized by a laser diode (12) and the receiving means (20) is associated with the laser diode by self-mixing, the focal distance (D) being between 5 cm and 2 m.

13. Method according to 12, **characterized in that** the emitting of the laser beam is in single longitudinal mode.

14. Method according to claims 12 or 13, **characterized in that** the step of selecting a portion of the received signal is done after prior step of processing of the received signal, for example after a step of applying a Fourier transform.

15. Method according to one of claims 12 to 14, **characterized in that** it also comprises a step of electronic amplification of the interference signal.
